# EUROPEAN PATENT APPLICATION

(11) **EP 3 216 721 A1**
(43) Date of publication of application: **13.09.2017**
(21) Application number: 15856830.3
(22) Date of filing: 23.09.2015
(51) Int. Cl.: B65D 85/52, B65D 81/22, B65D 21/00, A01G 9/02

(54) **STACKABLE CRATE FOR STORING AND TRANSPORTING LIVING PLANT PRODUCTS**

(30) Priority: 04.11.2014 ES 201431434 U
(71) Applicant: Ruiz Carmona, Manuel, 03190 Pilar de la Horadada (Alicante) (ES)
(72) Inventor: Ruiz Carmona, Manuel, 03190 Pilar de la Horadada (Alicante) (ES)
(74) Representative: Ungria López, Javier
(86) International application number: PCT/ES2015/070690
(87) International publication number: WO 2016/071547

(57) **Abstract**

The invention relates to a stackable crate for storing and transporting products, preferably "living" plant products such as plants, flowers, seedlings of fruit trees etc., which allows the product to be kept fresh and in specific humidity conditions. The crate (1) comprises: a base (2); two smaller side walls (5) and two larger side walls (6) with horizontal ribs (7); upper horizontal ribs (8) and vertical ribs (9) joined together; and tubular columns (11) forming the corners of the crate where the base (2) and the side walls (5, 6) of the crate meet. The base comprises: a lower solid peripheral edge (3) that does not have any openings communicating with the outside and is joined to the side walls of the crate, and a vertical tubular projection (4) open at both ends and arranged on the upper face of the base, for the removal of water, the lower solid peripheral edge and the vertical tubular projection allowing a determined quantity of water to remain stagnant in said base.

## Description

### OBJECT OF THE INVENTION

The object of the present invention relates to a stackable crate for storing and transporting products, preferably "living" plant products such as plants, flowers, seedlings of fruit trees etc., which allows the product to be kept fresh and in specific humidity conditions.

It is especially applicable to the field of transportation and stacking product in crates.

### TECHNICAL PROBLEM TO BE SOLVED AND BACKGROUND OF THE INVENTION

It has generally been proved that there is a problem in transporting "living" plant products such as plants, flowers, fruit tree seedlings, etc. in conventional crates, and this is due to the fact that this type of products must have specific humidity conditions for the product to be kept fresh.

This problem arises during transport from nurseries to the point of sale, as well as from the point of sale to the buyer's home, either directly by the buyer himself or by a distributor. In any case many plants deteriorate due to the fact that there are no crates with suitable means for transport.

Therefore, the present invention solves the aforementioned problems of the state of the art by providing a crate with the following advantages:
1. It allows transporting and storing living plant products such as plants, flowers and fruit tree seedlings in specific humidity conditions, such that the product is always kept fresh.
2. It has a light structure.
3. It is very inexpensive.

### DESCRIPTION OF THE INVENTION

The present invention relates to a stackable crate for storing and transporting live plant products, open at the top, comprising:
- a base,
- two smaller side walls and two larger side walls wherein said walls comprise horizontal ribs, upper horizontal ribs and vertical ribs, said ribs being joined together, and

- tubular columns forming the corners of the crate wherein the base and the side walls of the crate meet, such that the base comprises:
- a lower solid peripheral edge that does not have any openings communicating with the outside and is joined to the side walls of the crate, and
- at least one vertical tubular projection open at both ends and arranged on the upper face of the base, for the removal of water.
wherein the lower solid peripheral edge and the at least one vertical tubular projection allow a determined quantity of water to remain stagnant in said base.

According to a preferred embodiment, the base comprises four vertical tubular projections, which have a truncated cone shape and have a determined height that is always lower than the height of the lower peripheral edge of the crate, said height of the vertical tubular projection determining the volume of the quantity of water stagnant in the base.

The tubular columns comprise circular openings in the upper part and circular-shaped supports in the lower part, so that when stacking several crates, the supports in the lower part of the tubular columns are fitted into the circular openings located in the upper part of said tubular columns, thus allowing the perfect centering of the crates during stacking and preventing the crate from moving relative to the other crates.

In a preferred embodiment of the invention, the crate is made of plastic.

The vertical ribs, the horizontal ribs, the upper horizontal ribs and the lower peripheral edge are joined together to form a grid, and in addition, the horizontal ribs and the upper horizontal ribs meet at the tubular columns.

The side walls comprise inclined end portions that begin at the upper horizontal ribs and end at the tubular columns to provide sufficient space when stacking several crates filled with living plant products.

### BRIEF DESCRIPTION OF THE DRAWINGS

In order to complete the description and with the purpose of aiding a better understanding of the characteristics of the invention, a set of drawings is provided as an integral part thereof, which represents the following in an illustrative but not limitative manner:

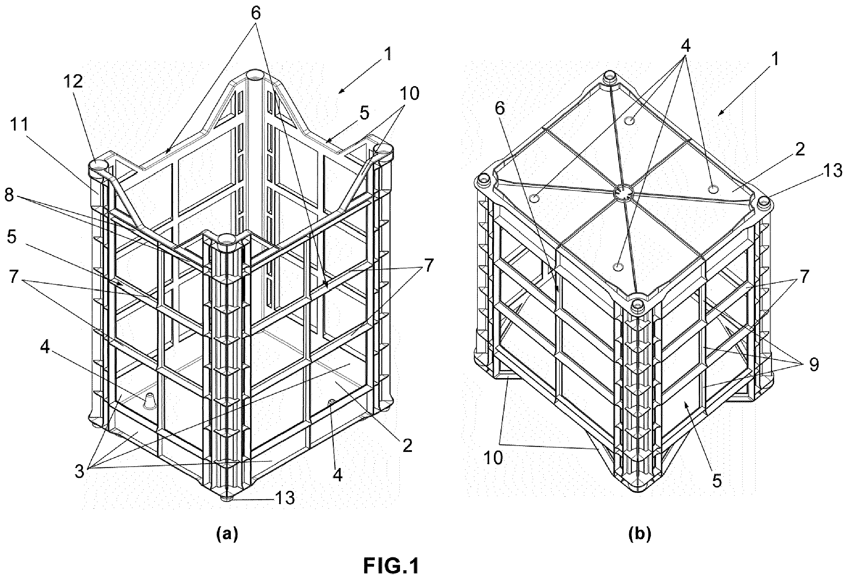

Figure 1 a.- Shows a view of the mouth of the crate of the invention.
Figure 1 b.- Shows a view of the lower face of the base of the crate.

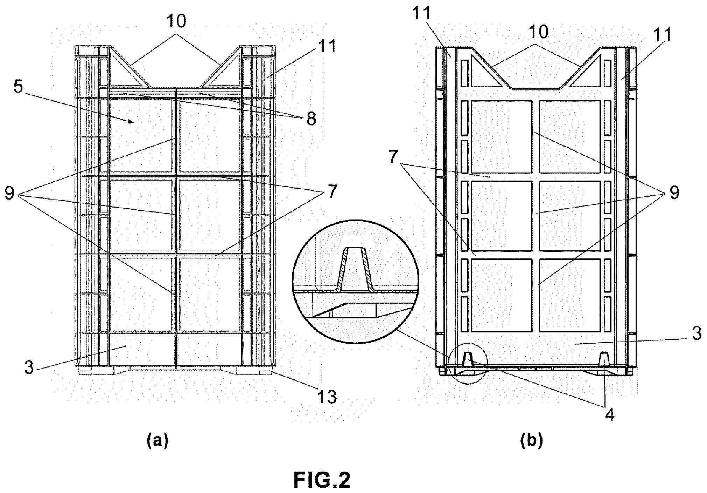

Figure 2a.- Shows a view of the smaller side walls of the crate.
Figure 2b.- Shows a section of the smaller side walls of the crate as well as a detail of the vertical tubular projections.

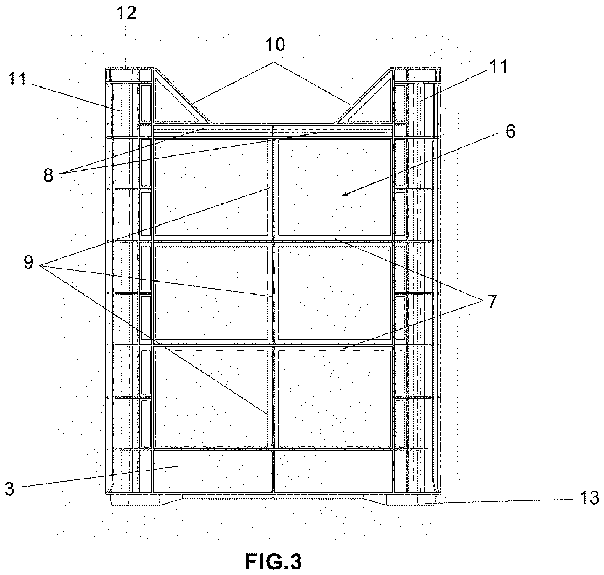

Figure 3.- Shows a view of the larger side walls of the crate.

The following is a list of the different elements represented in the figures that make up the invention:
1. Crate.
2. Base.
3. Lower peripheral edge,
4. Vertical tubular projection.
5. Smaller side walls.
6. Larger side walls.
7. Horizontal ribs.
8. Upper horizontal ribs.
9. Vertical ribs.
10. Inclined end portions.
11. Tubular columns.
12. Openings of the upper part of the tubular columns.
13. Supports of the lower part of the tubular columns

### DETAILED DESCRIPTION

The invention relates to a stackable crate (1) for storing and transporting products, preferably "living" plant products such as plants, flowers, seedlings of fruit trees etc., which makes it possible to transport said products in a comfortable manner while allowing the product to be kept fresh and in specific humidity conditions.

The stackable crate (1) for storing and transporting living plant products is open at the top and comprises:
- a base (2),
- two smaller side walls (5) and two larger side walls (6) wherein said walls (5, 6) comprise horizontal ribs (7), upper horizontal ribs (8) and vertical ribs (9), said ribs (7, 8, 9) being joined together, and
- tubular columns (11) forming the corners of the crate (1) wherein the base (2) and side walls (5,6) of the crate (1) meet,
wherein that the base (2) comprises a lower peripheral edge (3) and at least one vertical tubular projection (4) that allow a determined quantity of water to remain stagnant in said base (2).

The vertical ribs (9), the horizontal ribs (7), the upper horizontal ribs (8) and the lower peripheral edge (3) are joined together to form a grid, and in addition, the horizontal ribs (7) and the upper horizontal ribs (8) meet at the tubular columns (11).

The side walls (5,6) also comprise inclined end portions (10) that begin at the upper horizontal ribs (8) and end at the tubular columns (11), causing the crate (1) to be raised with the purpose of providing enough space such that, if several crates (1) filled with plant products are stacked, there is space for the products not to deteriorate and/or break due to the crushing effect of the base (2) of the upper crate (1).

The tubular columns (11) comprise circular openings (12) in the upper part and circular-shaped supports (13) in the lower part, so that when stacking several crates (1) the supports (13) in the lower part of the tubular columns (11) are fitted into the circular openings (12) located in the upper part of said tubular columns (11), thus allowing the perfect centering of the crates (1) during stacking and preventing the crate (1) from moving relative to the other crates (1).

The fact that the side walls (5,6) are formed by ribs (7, 8, 9) makes the crate (1) lighter with respect to other conventional crates (1) and in turn, this design allows the necessary light to enter in order to keep said plant products fresh. In addition, by using much less raw material, manufacturing costs are substantially reduced. Derived from this fact, the recycling costs of the crate (1) are substantially lower.

In a preferred embodiment of the invention, the crate (1) is made of plastic, or other monobloc materials and is even foldable, but it obviously can be made of any other material that enables obtaining the aforementioned characteristics.

The at least one vertical tubular projection (4), tubular being understood as a hollow part, is open at both ends and is located on the upper face of the base (2). According to a preferred embodiment, the base (2) comprises four vertical tubular projections (4), which have a truncated cone shape and have a determined height that is always lower than the height of the lower peripheral edge (3) of the crate (1), said height determining the volume of the amount of stagnant water in the base (2).

The lower peripheral edge (3) of the crate (1) is joined to the side walls (5, 6) of the crate (1), and is solid, that is, it does not have any openings communicating with the outside. Thus, thanks to the vertical tubular projections (4) and the lower peripheral edge (3) of the crate (1), when pouring water from the upper part of the crate (1), either a single crate (1) or a set of stacked crates (1), a determined quantity of water is stored on the base (2) of the crate (1), wherein said quantity of water is precisely that which is not evacuated by the vertical tubular projections (4), which act as a drain.

When the crates (1) are stacked and filled with fresh products, when pouring water from an upper plane of the crate (1) and thanks to the vertical tubular projections (4), the rest of the bases (2) of the crates (1) are filled from top to bottom.

The present invention should not be limited to the embodiment described herein. Other embodiments may be performed by persons skilled in the art based on this description. Accordingly, the scope of the invention is defined by the following claims.

## Claims

1. A stackable crate (1) for storing and transporting living plant products, open at the top, which comprises:
- a base (2);
- two smaller side walls (5) and two larger side walls (6), wherein said walls (5, 6) comprise horizontal ribs (7), upper horizontal ribs (8) and vertical ribs (9), said ribs (7, 8, 9) being joined together, and
- tubular columns (11) forming the corners of the crate wherein the base (2) and the side walls (5, 6) of the crate (1) meet,
**characterized in that** the base (2) comprises:
- a lower solid peripheral edge (3) that does not have any openings communicating with the outside and is joined to the side walls (5, 6) of the crate (1), and
- at least one vertical tubular projection (4) open at both ends and arranged on the upper face of the base (2), for the removal of water,
wherein the lower solid peripheral edge (3) and the at least one vertical tubular projection (4) allow a determined quantity of water to remain stagnant in said base (2).

2. The stackable crate (1) for storing and transporting living plant products according to claim 1, **characterized in that** the at least one vertical tubular projection (4) has a height lower than the height of the lower peripheral edge (3), said height of the vertical tubular projection (4) determining the volume of the quantity of water stagnant in the base (2).

3. The stackable crate (1) for storing and transporting living plant products according to claim 2, **characterized in that** the at least one vertical tubular projection (4) has a truncated cone shape.

4. The stackable crate (1) for storing and transporting living plant products according to claims 2 or 3, **characterized in that** the base (2) comprises four vertical tubular projections (4).

5. The stackable crate (1) for storing and transporting living plant products according to claim 4, **characterized in that** the tubular columns (11) comprise circular openings (12) in the upper part.

6. The stackable crate (1) for storing and transporting living plant products according to claim 5, **characterized in that** the tubular columns (11) comprise circular-shaped supports (13) in the lower part.

7. The stackable crate (1) for storing and transporting living plant products according to claim 1, **characterized in that** the crate (1) is made of plastic.

8. The stackable crate (1) for storing and transporting living plant products according to claim 1, **characterized in that** the vertical ribs (9), the horizontal ribs (7), the upper horizontal ribs (8) and the lower peripheral edge (3) are joined together forming a grid.

9. The stackable crate (1) for storing and transporting living plant products according to claim 8, **characterized in that** the horizontal ribs (7) and the upper horizontal ribs (8) meet at the tubular columns (11).

10. The stackable crate (1) for storing and transporting living plant products according to claim 1, **characterized in that** the side walls (5, 6) comprise inclined end portions (10) that begin at the upper horizontal ribs (8) and end at the tubular columns (11), to provide sufficient space when stacking several crates (1) filled with living plant products.
